# EUROPEAN PATENT APPLICATION

(11) **EP 4 310 759 A1**
(43) Date of publication of application: **24.01.2024**
(21) Application number: 22771290.8
(22) Date of filing: 11.03.2022
(51) Int. Cl.: G06Q 30/02, G06F 16/29, G06F 16/906, G06F 16/909

(54) **CLUSTER GENERATION DEVICE, CLUSTER GENERATION METHOD, AND CLUSTER GENERATION PROGRAM**

(30) Priority: 19.03.2021 JP 2021045348
(71) Applicant: Piis Inc., Tokyo 180-0004 (JP)
(72) Inventor: MORITA Shimpei, Musashino-shi, Tokyo 180-0004 (JP)
(74) Representative: AWA Sweden AB
(86) International application number: PCT/JP2022/010761
(87) International publication number: WO 2022/196542

(57) **Abstract**

A cluster generation program includes: a user information acquisition step of acquiring items of position information on a plurality of users and items of time information; and a first cluster generation step of detecting, using the items of position information on the users, types of spots visited by the users and generating first clusters based on a commonality of the types of the spots visited, the first clusters being classifications of the users.

## Description

### [TECHNICAL FIELD]

The present disclosure relates to a cluster generation apparatus, a cluster generation method, and a cluster generation program that classify users based on items of position information on the users and items of spot information visited by the users.

### [BACKGROUND ART]

As smartphones are in widespread use in recent years, items of position information on users can be acquired easily. Acquisition of items of position information on a plurality of users enables a flow of people to be visualized, enabling analysis of what type of people gather at what type of location and where people move from and to. Further, analysis based on commonalities of locations visited by people can be useful for regional development, cultural preservation, business, and the like.

For example, Patent Literature 1 proposes a method of performing clustering using movement histories of and items of preference information on users and the like to analyze tastes and preferences, behavioral patterns, and the like of the people.

### [CITATION LIST]

### [PATENT LITERATURE]

[Patent Literature 1]
Japanese Patent Laid-Open No. 2019-197460

### [SUMMARY OF INVENTION]

### [TECHNICAL PROBLEM]

However, in the method disclosed in Patent Literature 1, the clustering is performed using the action histories of users as an element. As a result, users who live in the same region are highly likely to be generated as one cluster, and it is thus difficult to perform an analysis over a wide region such as the whole country and the whole world.

An objective of the present disclosure is therefore to provide a cluster generation program, a cluster generation method, and a cluster generation apparatus for grasping features of clusters by performing clustering using types of spots visited by users, for example, genres of the spots such as a restaurant, a movie theater, and a park, as elements when spots visited by the users are acquired from movement histories of the users, so as to perform clustering on the users with a reduced influence of regionality.

### [SOLUTION TO PROBLEM]

There is provided a program to be executed by a computer including a processor and a memory. The program causes the processor to execute: a user information acquisition step of acquiring items of position information on a plurality of users and items of time information; and a first cluster generation step of detecting, using the items of position information on the users, types of spots visited by the users and generating first clusters based on a commonality of the types of the spots visited, the first clusters being classifications of the users.

### [ADVANTAGEOUS EFFECT OF INVENTION]

According to the present disclosure, by generating clusters from items of position information on users using items of information on spots visited by the users and types of the spots, it is possible to analyze a behavioral pattern of a user with a reduced influence of regionality in, for example, an analysis over a wide target such as a countrywide analysis.

### [BRIEF DESCRIPTION OF DRAWINGS]

[Figure 1] Figure 1 is a diagram illustrating an example of a server configuration of Embodiment 1 of the present disclosure.
[Figure 2] Figure 2 is a diagram illustrating an example of a data configuration of a user information DB 1021.
[Figure 3] Figure 3 is a diagram illustrating an example of a data configuration of a spot information DB 1022.
[Figure 4] Figure 4 is a chart illustrating an example of a radar chart of a parameter such as a toral duration of stay by types of spots visited by users.
[Figure 5] Figure 5 is a diagram illustrating an example of clustering based on commonalities of spots visited by users.
[Figure 6] Figure 6 is a diagram illustrating an example of clustering based on durations of stay, numbers of visits, and the like in addition to commonalities of spots visited by users.
[Figure 7] Figure 7 is a diagram illustrating an example of a flow of a process in Embodiment 1 in a cluster generation program.
[Figure 8] Figure 8 is a diagram illustrating an example of a server configuration of a modification of the present disclosure.
[Figure 9] Figure 9 is a diagram illustrating an example of a flow of a process in the modification in the cluster generation program.
[Figure 10] Figure 10 is a diagram illustrating an example of a server configuration of Embodiment 2 of the present disclosure.
[Figure 11] Figure 11 is a diagram illustrating an example of changes in type of spot.
[Figure 12] Figure 12 is a diagram illustrating an example of a schedule of a cluster.
[Figure 13] Figure 13 is a diagram illustrating an example of a schedule of a cluster with bar charts.
[Figure 14] Figure 14 is a diagram illustrating an example of a flow of a process in Embodiment 2 in a cluster generation program.
[Figure 15] Figure 15 is a diagram illustrating a general configuration of a server according to the present disclosure.
[Figure 16] Figure 16 is a diagram illustrating a specific example of a cluster generation program via a network.

### [DESCRIPTION OF EMBODIMENTS]

A clustering program, a clustering method, and a clustering apparatus according to embodiments of the present disclosure will be described below with reference to the drawings. The embodiments described below shall not be construed as unreasonably limiting the content of the present disclosure described in the claims. In addition, all of the components described in the embodiments are not necessarily essential requirements for the present disclosure. In all of the drawings used for illustrating the embodiment, the same constituent components are denoted by the same reference characters, and repetitive descriptions thereof will be omitted.

### <Embodiment 1>

In Embodiment 1, position information is acquired from users, and spots visited by the users are subjected to clustering.

### <Configuration of Server>

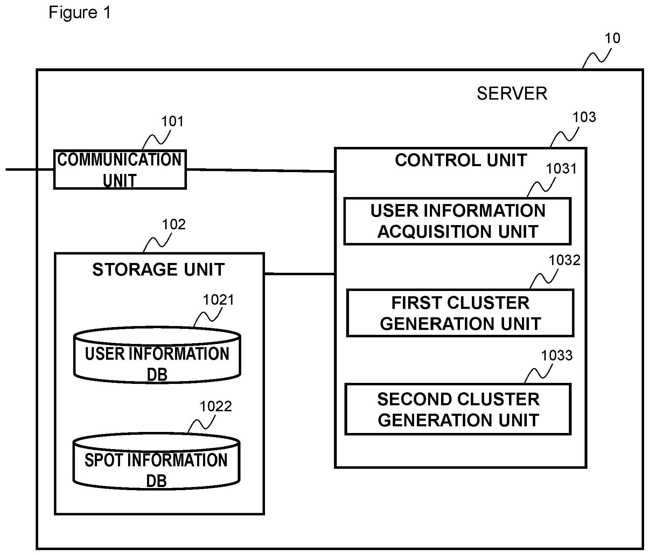

A configuration of a server 10 will be described below in detail. As illustrated in Figure 1, the server 10 according to the present embodiment includes a communication unit 101, a storage unit 102, and a control unit 103. The communication unit 101 performs a process for enabling the server 10 to communicate with another apparatus. The communication unit 101 subjects a signal generated by the control unit 103 to a transmitting process and transmits the signal subjected to the transmitting process to the outside. The communication unit 101 subjects a signal received from the outside to a receiving process and outputs the signal subjected to the receiving process to the control unit 103.

The storage unit 102 is configured with, for example, a flash memory and the like and stores data and programs to be used by the server 10.

The control unit 103 is implemented by a processor 11 reading a program stored in the storage unit 102 and executing instructions included in the program. The control unit 103 controls operation of the server 10. Specifically, for example, the control unit 103 exercises functions as a user information acquisition unit 1031, a first cluster generation unit 1032, and a second cluster generation unit 1033.

A functional configuration of the control unit 103 of the server 10 will be described below.

The user information acquisition unit 1031 acquires, via the communication unit 101, items of position information and items of time information on users. The items of position information on the users are items of information each including, for example, a latitude, a longitude, and the like. The items of time information are each an item of time information on a time point at which an item of position information is acquired.

To acquire the items of position information on the users, information from the global positioning system (GPS) mounted in smartphones, smartwatches, or the like possessed by the users may be used. The items of position information may be acquired by the users causing a terminal placed at a spot, such as a magnetic stripe reader and an IC card reader, to read the users' terminals. Further, items of position information obtained from base stations for communication devices such as mobile phones and items of position information obtained from Wireless Fidelity (WiFi, (R)) may be acquired.

The user information acquisition unit 1031 may acquire the items of position information based on information submitted to a social networking service (SNS) .

The user information acquisition unit 1031 periodically acquires items of position information and items of time information from the users at certain time intervals. The shorter the intervals between acquisitions of the items of position information on the users, the more desirable they are in that they enable detailed analysis.

In contrast, longer time intervals between acquisitions of the position information enable a reduction in load on a system and a network, and shorter intervals increase a possibility that the users' actions can be analyzed in detail. The user information acquisition unit 1031 therefore may set time intervals to acquire the items of position information on the users with consideration given to a target of the analysis and a load on the system.

The user information acquisition unit 1031 stores the items of position information acquired from the users together with user IDs and the acquired items of time information in a user information DB 1021. The server 10 desirably stores the items of position information on the users in the storage unit 102 once for performing a cluster analysis from various points of view.

The first cluster generation unit 1032 generates first clusters, which are classifications of users, based on types of spots visited by the users. Note that the spot refers to a fixed location such as a shop and a facility that can be identified with a latitude and a longitude. The type of a spot is specifically a restaurant, an amusement facility, a computer shop, a bookstore, or the like, indicating a superordinate concept of the spot such as a classification, a genre, or the like of the spot. In addition, the type of a spot may be provided in terms of not only a classification by its business but also a classification by its service viewed from various aspects such as an opening date of the spot, a date on which the spot is introduced or registered on a social networking service (SNS), a medium, or the like, a service that typifies a country (e.g., of an American style, an Italian style, etc.), a classification by average customer spend, a classification by whether the spot is for a public market or a niche market.

The first cluster generation unit 1032 first grasps, based on information acquired from the user information acquisition unit 1031 and information from a spot information DB 1022, what spots users have checked in, that is, what spots the users have visited.

To determine a visit of a user to a spot, for example, the first cluster generate portion 1032 compares position information on the user such as the user's latitude and longitude with position information on the spot such as its latitude and longitude. When the locations match each other, the first cluster generation unit 1032 determines the visit.

If the visit is regarded as a strict match between the items of position information, there is a possibility that it is determined that the user has visited no spots. Thus, a threshold value L may be set, and a user may be regarded as having visited a spot when a distance between the spot and the user is no more than L. This enables an error between the items of position information to be accommodated. A map may be divided into mesh cells in advance, and a user may be regarded as having visited a spot in a cell of the mesh. Alternatively, a visit of a user to a spot may be determined with a common algorithm.

The first cluster generation unit 1032 determines a visit of a user to a spot by determining a match between items of position information on the user and the spot. At this time, a simple match between the items of position information may be determined as a visit, or items of matched information for a continuous time may be used to determine a visit to be a passage, a visit, and a use, in a distinguishing manner.

For example, in the case where the user information acquisition unit 1031 acquires position information on a user at certain time intervals, there may be a case where a match between items of position information on a user and a spot does not mean a visit of the user to a spot but means that the user has merely passed by the spot. This case may be determined as a passage. Alternatively, in the case where items of position information on a user and a spot match each other a certain number (first threshold value) of consecutive times or more, it may be determined that the user has visited the spot. In the case where, at a spot such as a movie theater, a hot spring facility, and a theme park, items of position information on a user and the spot match each other a certain number (second threshold value) of consecutive times or more, it may be determined that the user has used the spot. Alternatively, in the case where items of position information on a user and a spot match each other a certain number (third threshold value) of consecutive times or more, it may be determined that the user works at the spot. In addition, in the case where there is a location where a user stays for a long time including nighttime hours, a location where the user stays for a long time including weekends and holidays, or the like, it may be determined that the user stays at home at the spot.

That is, when the number of matches between items of position information on a user and a spot for a continuous time is less than the first threshold value, the matches may be determined to be a passage, when the number of matches is equal to or more than the first threshold value and less than the second threshold value, the matches may be determined to be a visit, and when the number of matches is equal to or more than the second threshold value and less than the third threshold value, the matches may be determined as a use. The threshold values may be set for each spot.

The first cluster generation unit 1032 may take a user's moving method into consideration to determine a visit of the user to a spot. The user information acquisition unit 1031 acquires position information on a user at certain time intervals. At this time, for example, the user information acquisition unit 1031 may estimate a moving speed from a moving distance per unit time based on a moving distance from items of position information at consecutive time points and may determine that a moving method of the user is walking or that the user uses a moving method such as automobile and a train. In the case where it is determined that the user has moved at least by automobile, train, or the like, even a match between items of position information on the user and a spot does not mean a visit of the user to the spot but means that the user merely has passed by the spot, and therefore, the first cluster generation unit 1032 may be configured not to determine that the user has visited the spot.

In the case where position information on a user is acquired from, for example, a terminal placed at a spot such as a magnetic stripe reader and an IC card reader, the first cluster generation unit 1032 may determine that the user has visited the spot based on such a terminal has read the user's terminal.

The first cluster generation unit 1032 detects types of spots from spots visited by users and generates first clusters, which are classifications of the users, based on the types of the spots visited by the users. For example, the first cluster generation unit 1032 generates the first clusters using hierarchical clustering, non-hierarchical clustering, a known algorithm, or the like based on commonalities of the types of the spots visited by the users. At this time, the first cluster generation unit 1032 sets M as a target number of clusters to be generated and generates the clusters based on common types of the spots.

In performing the clustering, the first cluster generation unit 1032 may take types and total durations of stay of spots into account and may perform non-hierarchical clustering based on similarities in type and total duration of stay. Alternatively, for example, the first cluster generation unit 1032 may take types, average durations of stay, and the numbers of visits of spots into account and may perform non-hierarchical clustering based on similarities in type, average duration of stay, and the number of visits.

When performing the clustering, the first cluster generation unit 1032 may take into account total durations of stay, the numbers of visits, time points of visit, dates and times of visit, average durations of stay, commonalities of the number of spots visited, and the like, by types of spots, to generate the first clusters.

For example, in the case where users who have stayed in parks for 15 hours are subjected to the clustering based simply on total durations of stay, the clustering is performed such that a user who has visited a park for 0.5 hours × 30 times and a user who has visited a park for 5 hours × 3 times are in the same cluster. However, there is a possibility that the visits of the user who has visited the park for 0.5 hours × 30 times are for jogging, whereas the visits of the user who has visited the park for 5 hours × 3 times are for flower-viewing. Therefore, performing the clustering with consideration given to the numbers of visits and average durations of stay enables a distinction between the users. Similarly, in the case where users who have stayed in parks for 15 hours are subjected to the clustering based simply on spots of the same type, the clustering is performed such that a user who has visited the same park for 3 hours × 5 times and a user who has visited different parks for 3 hours × 5 times are in the same cluster. Performing the clustering with consideration given to numbers of visits and the numbers of spots visited, by types of spots, enables a distinction between the users. In this manner, when performing the clustering, the first cluster generation unit 1032 may take into consideration total durations of stay, the numbers of visits, the time points of visit, the dates and times of visit, the average durations of stay, the number of spots visited, by types of spots, in addition to the commonalities of types of spots.

For example, when performing the clustering, the first cluster generation unit 1032 may use information on dates and times of visit to generate a cluster of visits to movie theaters in August, a cluster of visits to ski resorts in December, and the like.

Further, when performing the clustering, the first cluster generation unit 1032 may weight elements such as commonalities of types of spots, and total durations of stay, the numbers of visits, time points of visit, dates and times of visit, average durations of stay, the number of spots visited, and the like, by types of spots, to generate the clusters with the weighted elements taken into account.

For example, when the clustering is performed with importance given to actions on a specific date and time common to a cluster, such as participating a year-end countdown, importance is given to dates and times of visit, and users who have visited a theme park and the like on the specific date and time are preferentially subjected to the clustering, by which a cluster of participants of a seasonal event can be generated. For example, in performing the clustering, importance is given to dates and times of visit, and a cluster including visits to ski resorts in early August, a cluster including visits to exhibition sites in the middle of August and in late December, and the like, which are featured as including visits on a specific date and time, a specific period by types of spots, may be generated.

The first cluster generation unit 1032 may give a high value to a type of a spot when the spot is a significant location, that is, when the location has a high rarity. A significant element of a spot, a user, an action of a user, and the like may be given a rarity.

The first cluster generation unit 1032 may give a rarity to a type of spots based on how many the spots are in a surveyed area, that is, a deviation in or a proportion of the type of the spots. For example, a type of spots that are small in number may be given a high rarity. Specifically, in the case where there are 1000 spots of convenience stores and 10 spots of movie theaters, a high rarity is given to the movie theaters, which are smaller in number. That is, a rarity may be given based on a value that is an inverse number of the number of spots of a type in a surveyed area.

For example, the first cluster generation unit 1032 may take a rarity into account based on a spot visited for a type of spots. For example, the rarity may be taken into account in such a manner that, when a movie theater having a high rarity is visited, 10 visit points are given, and that when a movie theater having a low rarity is visited, 1 visit point is given.

For giving a rarity, for example, in the case where users that are small in number but exceed a threshold value, that is, users of a number within a certain range, take the same action, the first cluster generation unit 1032 may give a high value.

The first cluster generation unit 1032 may give rarities based on, for example, actions of users such as how long durations of stay at spots are, how many visits to the spots are and/or deviations in time points of visit. For example, a rarity may be given to a type of spots at which many users show deviations compared with the other types of spots, or a rarity may be given to a type of spots at which some users show deviations compared with the other types of spots. The first cluster generation unit 1032 may perform the clustering with rarities taken into account.

To perform the clustering with a rarities taken into account, the first cluster generation unit 1032 may perform a calculation by the following method. For example, a value that is obtained by multiplying a frequency that is the number of visits of each user to spots of each type divided by a total number of visits of the user to spots of all types by a rarity that is a total number of visits of all users to spots of all types divided by the total number of visits of all users to spots of all types is used in place of the number of visits of a user to a spot in the clustering. This enables the clustering to be performed while rarities are given.

In the example described above, the number of visits is used in the clustering with rarities taken into account. However, the clustering with rarities taken into account may be performed for a total duration of stay, an average duration of stay, a time point of visit, a date and time of visit, the numbers of spots visited, or the like as with the number of visits as in the example described above. That is, the clustering may be performed in such a manner that an importance of a type of a spot in an action by a user is evaluated by letting i = (A/B) × (C/D) and using a rarity (C/D) with combinations of A, B, C, and D being set such as (the number of visits of each user to spots of each type, a total number of visits of the user to spots of all types, a total number of visits of all users to spots of all types, and a total number of visits of all users to spots of the type), (a total duration of stay of each user at spots of each type, a total duration of stay of the user at spots of all types, a total duration of stay of all users at spots of all types, and a total duration of stay of all users at spots of the type), (an average duration of stay of each user at spots of each type, an average duration of stay of the user at spots of all types, an average duration of stay of all users at spots of all types, and an average duration of stay of all users at spots of the type), and (the number of spots of each type visited by each user, a total number of spots of all types visited by the user, a total number of spots of all types visited by all users, and a total number of spots of the type visited by all users).

When generating the first cluster, the first cluster generation unit 1032 may use hierarchical clustering, non-hierarchical clustering, or a known clustering algorithm.

When generating the first clusters, the first cluster generation unit 1032 may specify a certain time range and may generate first clusters that fall within a specified time period. At this time, the first cluster generation unit 1032 may generate a cluster within a range of days of the week, hours in the day, or the like.

Performing the clustering based on a certain element such as a commonality of types of spots enables characteristics of each cluster or spot to be grasped. In addition, performing the clustering by types of spots enables the clustering to be performed over a wide region with a reduced influence of regionality. Note that, in Embodiment 1, the clustering on users may be performed using the function of the first cluster generation unit 1032 by using only the first clusters obtained by performing the clustering using types of spots visited by the users.

The second cluster generation unit 1033 generates second clusters, which are classifications of users, based on spots visited by the users for each of the first clusters generated by the first cluster generation unit 1032.

Specifically, assume that three clusters A, B, and C are generated as the first clusters by the first cluster generation unit 1032. The second cluster generation unit 1033 generates the second clusters, which are classifications of users, for the cluster A based on spots visited by the users. Similarly, the second cluster generation unit 1033 generates the second clusters for the clusters B and C. While the first cluster generation unit 1032 performs the clustering based on types of spots visited by users, the second cluster generation unit 1033 performs a clustering based on spots visited by users.

For example, the second cluster generation unit 1033 generates the clusters using hierarchical clustering, non-hierarchical clustering, a known algorithm, or the like based on commonalities of the spots visited by the users. At this time, the second cluster generation unit 1033 may set M as a target number of clusters to be generated and may extract, after performing the clustering, top M clusters with the highest number of the same spots and the highest number of the same users and then make the M clusters constitute the clusters. At this time, the clustering may be performed with rarities taken into account by the method described above.

When performing the clustering, the second cluster generation unit 1033 may take into account total durations of stay, the numbers of visits, time points of visit, dates and times of visit, average durations of stay, and the like, of spots, to generate the clusters.

Further, when performing the clustering, the second cluster generation unit 1033 may weight elements such as total durations of stay, the numbers of visits, time points of visit, dates and times of visit, average durations of stay, and the like, of spots, to generate the clusters with the weighted elements taken into account.

The second cluster generation unit 1033 may give a high value to a spot when the spot is a significant location, that is, when the location has a high rarity.

For giving a rarity, for example, in the case where users that are small in number but exceed a threshold value, that is, users of a number within a certain range, take the same action, the second cluster generation unit 1033 may give a high value.

The second cluster generation unit 1033 may give rarities based on, for example, how long durations of stay at spots are, how many the spots are in a surveyed area, how many visits to the spots are and/or deviations in time points of visit. For example, a rarity may be given to spots at which many users show deviations compared with the other spots, or a rarity may be given to spots at which some users show deviations compared with the other spots. The second cluster generation unit 1033 may perform the clustering with rarities taken into account.

Specifically, when a duration of stay of a spot is normally within 15 minutes, but only some users stay the spot for 60 minutes or longer, the spot may be given a high rarity, and the clustering may be performed with consideration given to commonalities of spots and durations of stay at the spots.

To perform the clustering with rarities taken into account, the second cluster generation unit 1033 may perform, for example, a calculation by the following method. For example, a value that is obtained by multiplying a frequency that is the number of visits of each user to each spot divided by a total number of visits of the user to all spots by a rarity that is a total number of visits of all users to all spots divided by a total number of visits of all users to the spot is used in place of the number of visits of a user to a spot in the clustering. This enables the clustering to be performed while rarities are given. Rarities may be taken into account using not only the number of visits but also a total duration of stay, an average duration of stay, a time point of visit, a date and time of visit, or the numbers of spots visited. That is, the clustering may be performed in such a manner that an importance of a spot in an action by a user is evaluated by letting i = (A/B) × (C/D) and using a rarity (C/D) with combinations of A, B, C, and D being set such as (the number of visits of each user to each spot, a total number of visits of the user to all spots, a total number of visits of all users to all spots, and a total number of visits of all users to the spot), (a total duration of stay of each user at each spot, a total duration of stay of the user at all spots, a total duration of stay of all users at all spots, and a total duration of stay of all users at the spot), (an average duration of stay of each user at each spot, an average duration of stay of the user at all spots, an average duration of stay of all users at all spots, and an average duration of stay of all users at the spot), and (the number of spots visited by each user for each spot, a total number of spots visited by the user for all spots, a total number of spots visited by all users for all spots, and a total number of spots visited by all users for the spot).

After generating the second clusters, the second cluster generation unit 1033 may extract a deviation of a spot for each cluster, give a rarity to the spot, and regenerate the second clusters. The second cluster generation unit 1033 may generate the second clusters, give rarities to spots, and score the spots to control the second clusters to be extracted when hierarchical clustering is used.

Further, for example, a high rarity may be given to a spot that has some feature, such as a spot that has a few related spots and a spot that has many related spots although the spot is distant from the other spots. Rarities may be given to spots with consideration given to how many publications on Internet sites are and/or deviations in the publications, or the like.

When generating the clusters, the second cluster generation unit 1033 may select only spots having rarities that exceed a certain threshold value and then generate the clusters based on commonalities of spots visited by users.

When generating the clusters, the second cluster generation unit 1033 may set high scores to clusters that include many spots having high rarities, and may preferentially generate clusters having high scores or sort, after generating clusters, the clusters in descending order of score and extract clusters.

When generating the clusters, the second cluster generation unit 1033 may limit a range of spots and an area for classification and may generate the clusters based on the spots and the area within the limited range. The second cluster generation unit 1033 may specify a certain time range and may generate clusters that fall within a specified time period. At this time, the second cluster generation unit 1033 may generate a cluster within a range of days of the week, hours in the day, or the like.

Performing the clustering based on a certain element such as a commonality of spots enables characteristics of each cluster or spot to be grasped. In general, users often visit spots near their places of residence. Therefore, by performing a second clustering based on spots visited by users, a regional analysis can be performed on the first clusters.

### (Specific Example of DB Stored in Storage Unit)

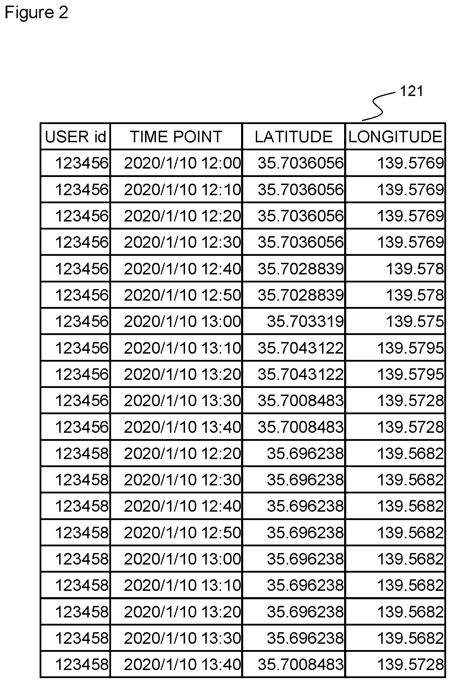

Figure 2 illustrates a specific example of the user information DB 1021. The user information acquisition unit 1031 periodically acquires items of position information and items of time information from the users at certain time intervals. The user information acquisition unit 1031 then stores user ids of the users on which the items of position information are acquired, acquisition time points, the items of position information (latitudes and longitudes) on the users in the user information DB 1021. Types of information stored in the user information DB 1021 is not limited to these. Other types of information such as ages (generations), sexes, and residential regions of the users may be stored.

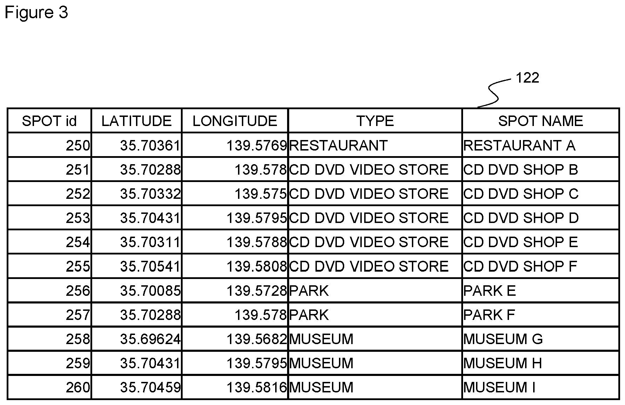

Figure 3 illustrates a specific example of the spot information DB 1022. In the spot information DB 1022, identification ids for identifying spots, items of position information (latitudes and longitudes) of the spots, names of the spots (shop names, etc.), types (classifications of the spots such as restaurant, theme park, station, etc.) are stored. In the spot information DB 1022, other types of information such as opening hours and average budgets of the spots may be stored, or links to official websites, introduction pages, or the like of the spots may be saved to allow various types of information on the spots to be acquired.

### (Specific Example of Generating Clusters)

The first cluster generation unit 1032 generates first clusters, which are classifications of users, based on types of spots visited by the users. To generate the clusters, a known, existing non-hierarchical clustering technique such as a K-means algorithm and a minimum average variance estimation may be used. The first cluster generation unit 1032 need not use only the non-hierarchical clustering but may use hierarchical clustering technique.

The first cluster generation unit 1032 may take into account total durations of stay, the numbers of visits, time points of visit, dates and times of visit, average durations of stay, commonalities of the number of spots visited, and the like, by types of spots, to generate the first clusters. The first cluster generation unit 1032 may take into account proportions of total durations of stay, the numbers of visits, time points of visit, dates and times of visit, average durations of stay, and the like, by types of spots, to generate the first clusters.

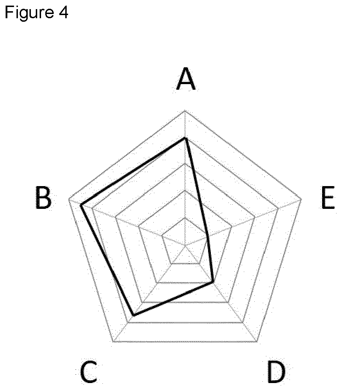

Figure 4 illustrates a radar chart of, for example, total durations of stay of spots types of which are assumed to be five, A to E. The first cluster generation unit 1032 may generate the first clusters after normalizing total durations of stay, the numbers of visits, time points of visit, dates and times of visit, average durations of stay, and the like, by types of spots by dividing them by their respective total numbers. That is, the first cluster generation unit 1032 may create a radar chart as illustrated in Figure 4 for each user and may generate the first clusters based on similarities among the radar charts. In this manner, generating the first clusters after the normalization enables the clustering in which similarities among the radar charts with ratios of parameters, that is, waveforms of the radar charts are regarded as important.

The first cluster generation unit 1032 may generate the first clusters using rarities. Specifically, a value that is obtained by multiplying a frequency that is the number of visits of each user to spots of each type divided by a total number of visits of the user to spots of all types by a rarity that is a total number of visits of all users to spots of all types divided by a total number of visits of all users to spots of the type is used in place of the number of visits of a user to a spot in the clustering. The rarity may be thereby taken into account.

When the rarities are taken into consideration, the rarities may be given with consideration given to not only the number of visits of a user but also elements such as proportions of a total duration of stay, a time point of visit, and an average duration of stay.

For example, the first cluster generation unit 1032 determines the number of clusters to be generated as K and generates K clusters by non-hierarchical clustering. Note that the first cluster generation unit 1032 need not use only the non-hierarchical clustering but may use another clustering technique.

For example, when a type of a spot cannot be properly acquired such as in the case where a plurality of types of spot are given to a facility and in the case where there are a plurality of facilities in the neighborhood of a position visited by a user indicated by position information, the first cluster generation unit 1032 may extract, from a target region, only a region where types of spot are limited to solve such a problem that a type of a spot cannot be properly grasped, and may then generate the first clusters.

The second cluster generation unit 1033 generates second clusters, which are classifications of users, based on spots visited by the users. At this time, the second cluster generation unit 1033 may use, for example, hierarchical clustering. However, the second cluster generation unit 1033 need not use only the hierarchical clustering but may use another clustering technique such as a non-hierarchical clustering technique.

In the hierarchical clustering, for example, types of the spots are subjected to the clustering with commonalities of the spots being regarded as distances or degrees of similarity. Specifically, for example, in the case where there are three spots A, B, and C, and ids of users who have visited the spots are A = (01, 02, 03, 04, 05), B =(01, 02, 03, 04, 06), and C = (01, 02, 07, 08, 09), A and B, which have a high commonality (a high degree of similarity) in user are first subjected to the clustering, and then the clustering is performed in the form of A + B, C. As possibilities in the hierarchical clustering, patterns A + B + C, A + B, C, A, and B are generated.

The second cluster generation unit 1033 combines similar spots together to perform the hierarchical clustering, thus generating the second clusters. At this time, a cluster including a few common spots is considered to be poor in feature because the cluster includes visits to typical locations such as a station and a convenience store. Therefore, clusters including many common spots (but including fewer common users) may be extracted to generate final clusters.

To select clusters having features, the second cluster generation unit 1033 may sort clusters in descending order of a value of the number of the same spots × the number of the same users. In addition, an index such as a total sum of durations of stay at the same spots may be used, and an element for extracting other clusters having a feature may be taken into account. Further, the second cluster generation unit 1033 may extract top M clusters using the indices and then make the M clusters constitute the clusters.

The second cluster generation unit 1033 need not use only the hierarchical clustering but may use non-hierarchical clustering or a known clustering algorithm to generate the clusters.

The second cluster generation unit 1033 may generate the second clusters using rarities. When generating the clusters, the second cluster generation unit 1033 may calculate rarities from spots included in the clusters as described later and may sort the generated clusters in descending order of rarity. At this time, the second cluster generation unit 1033 may extract top M clusters in descending order of rarity.

To calculate the rarities, for example, the second cluster generation unit 1033 may invert the number of visits of users and use the inverted number as a rarity.

For example, the second cluster generation unit 1033 may take rarities into account by using a value that is a total number of visits of all users to all spots divided by a total number of visits of all users to each spot, in place of a value that is an inverted number of visits of a user to a spot in the clustering.

When the rarities are taken into consideration, the rarities may be given with consideration given to not only the number of visits of a user but also an element such as a total duration of stay, a time point of visit, and an average duration of stay.

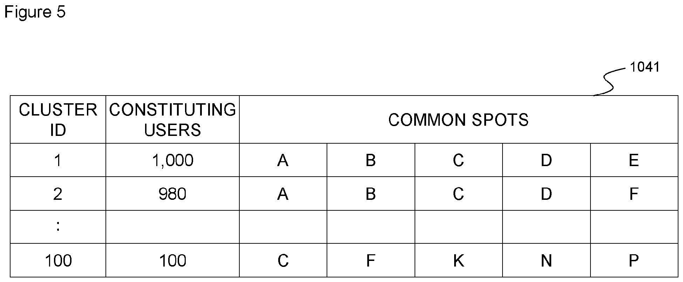

Figure 5 illustrates a specific example 1041 of the second clusters that are generated after the clustering performed by the second cluster generation unit 1033. The specific example 1041 shows, for example, an example in which generating 100 clusters is intended as a target, 100 clusters are generated in descending order of the number of same spots and the number of constituting users.

The second cluster generation unit 1033 may perform the clustering with not only commonalities of spots but also an element such as total durations of stay, time points of visit, dates and times of visit, the numbers of visits, average durations of stay, and the like, of spots taken into account. At this time, the second cluster generation unit 1033 may weight elements such as commonalities, total durations of stay, the numbers of visits, time points of visit, dates and times of visit, average durations of stay, and the like, of spots, to perform the clustering with the weighted elements taken into account.

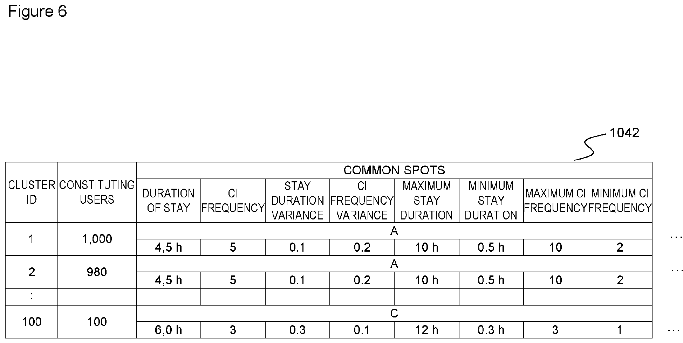

Figure 6 illustrates a specific example 1042 of the clustering with durations of stay, visit frequencies (denoted as CI frequency in Figure 6), variances of durations of stay, variances of visit frequencies, maximum durations of stay, minimum durations of stay, maximum visit frequencies, and minimum visit frequencies, in addition to commonalities of spots, taken into account. Although omitted in Figure 6, a plurality of spots are actually included in each second cluster as illustrated in Figure 5. For example, a second cluster with a cluster ID1 in Figure 6 includes not only a spot A but also spots B, C, D, and E as elements.

### (Flow of Process)

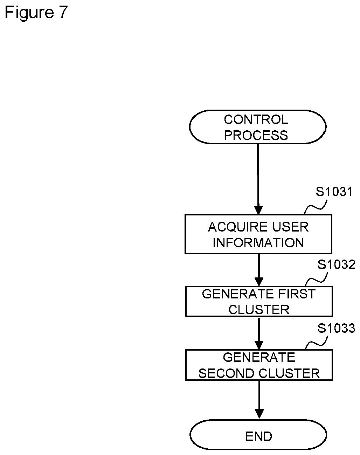

Figure 7 illustrates a flow of a process of a cluster generation program in Embodiment 1 of the present disclosure.

In step S1031, the user information acquisition unit 1031 acquires items of position information on users and time points. The user information acquisition unit 1031 then stores the acquired information in the user information DB 1021.

In step S1032, the first cluster generation unit 1032 grasps what spots the users have visited using the items of position information on the users, items of time information, and items of information on spots. Thereafter, the first cluster generation unit 1032 generates first clusters using items of information on the users who have visited the spots. The first clusters are each generated based on types of the spots that have been visited by the users in common.

In step S1033, the second cluster generation unit 1033 performs the clustering on the first clusters generated by the first cluster generation unit 1032, based further on commonalities of spots visited by users, thus generating second clusters.

### (Advantageous Effects)

According to the present embodiment, an analysis of how people gather at a spot or in an area can be performed with items of position information on users and items of information concerning spots visited by the users. Further, an analysis with the first clusters generated enables a clustering that is free from regional influence, such as a clustering in such a superordinate concept that a user who has visited a live venue in Tokyo and a user who has visited a live venue in Osaka have participated a live concert. That is, it is possible to perform such an analysis that the user who has visited the live venue in Tokyo and the user who has visited the live venue in Osaka both like live concerts.

Further, generating the second clusters further enables a specific analysis of what spots have been visited by users having a commonality. In addition, generating the second clusters enables a regional analysis. That is, it is possible to analyze everyday lives of a user in Tokyo and a user in Osaka who like live concerts. In addition, it becomes possible to perform, for example, such an analysis that the users have visited a live venue in Niigata.

### <Modification 1>

In Modification 1, a clustering is performed after a companion of a user is determined.

### <Configuration of Server>

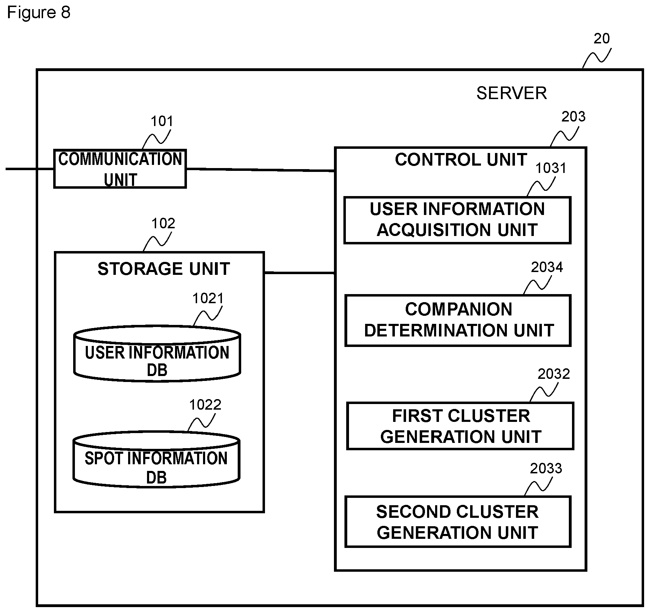

A configuration of a server 20 will be described below in detail. As illustrated in Figure 8, the server 20 according to the present embodiment includes a communication unit 101, a storage unit 102, and a control unit 203. The communication unit 101 performs a process for enabling the server 20 to communicate with another apparatus. The communication unit 101 subjects a signal generated by the control unit 203 to a transmitting process and transmits the signal subjected to the transmitting process to the outside. The communication unit 101 subjects a signal received from the outside to a receiving process and outputs the signal subjected to the receiving process to the control unit 203.

The storage unit 202 is configured with, for example, a flash memory and the like and stores data and programs to be used by the server 20.

The control unit 203 is implemented by a processor 11 reading a program stored in the storage unit 102 and executing instructions included in the program. The control unit 203 controls operation of the server 20. Specifically, for example, the control unit 203 exercises functions as a user information acquisition unit 1031, a companion determination unit 2034, a first cluster generation unit 2032, and a second cluster generation unit 2033.

A functional configuration of the control unit 203 of the server 20 will be described below.

The companion determination unit 2034 performs a determination concerning a companion from among users. For example, in the case where a user and another user visits a spot at the same time and the same location, it is determined that the other user accompanies the user.

If the companion determination unit 2034 determines that a user accompanies another user simply because they have visited the same spot at the same time point and at the same location, for example, users in a location where many people gather such as a movie theater and a live venue are all regarded as companions. Therefore, a threshold value such as three may be provided, and a user may be determined as a companion in the case where the user has visited spots being equal to or more than the threshold value at the same time points.

For example, the companion determination unit 2034 may provide a threshold value and determine companions by extracting users in descending order of distance that is shared by the users and exceeds the threshold value, for a moving distance within a certain time period.

The companion determination unit 2034 determines a total number of users who take the same action and calculates the total number as the number of companions. For example, in the case where the number of companions is two and where sexes or sexual orientation of the companions are determined, the companions can be assumed as a couple, and in the case where the number of companions is 20 or more, the companions can be assumed as being in some group.

The first cluster generation unit 2032 imposes, in the companion determination unit 2034, a certain condition about the number of companions (e.g., the number of companions is N, equal to or more than N, equal to less than N, from N to M inclusive, etc.) and generates the first clusters on users as companions who satisfies the condition. A method for generating the first clusters is the same as that of the first cluster generation unit 1032 in the server 10. For example, in the case where such a condition for companions that companions are in a group of two users acting together is imposed in the companion determination unit 2034 for analyzing couples, this enables generation and analysis of the first clusters for groups of two users acting together.

The second cluster generation unit 2033 generates, based on commonalities of spots visited for each first cluster, the second clusters for users who are determined to be companions in the companion determination unit 2034. A method for generate the second clusters is the same as that of the second cluster generation unit 1033 in the server 10.

By the method described above, the clustering and the analysis can be performed on users being a certain number of companions.

In an embodiment of Modification 1, the first cluster generation unit 2032 may perform the clustering for all numbers of companions (i.e., perform a normal clustering without no conditions for companions imposed) and may perform the clustering using the numbers of companions as one element in addition to commonalities of types of spots visited.

In an embodiment of Modification 1, when the generated first clusters and second clusters are analyzed, such an analysis with consideration given to the numbers of companions that a proportion of x persons acting together is y% for some spot or some type of spot in one cluster may be performed.

### (Flow of Process)

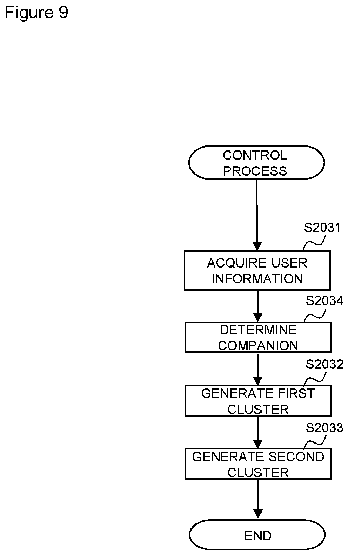

Figure 9 illustrates a flow of a process of a cluster generation program in a modification of the present disclosure.

In step S2031, the user information acquisition unit 1031 acquires items of position information on users and time points. The user information acquisition unit 1031 then stores the acquired information in the user information DB 1021.

In step S2034, the companion determination unit 2034 determines companions based on a visit of a plurality of users to the same spot at the same time point.

In step S2032, the first cluster generation unit 2032 grasps what spots the users accompanied by companions have visited using the items of position information on the users, items of time information, and items of information on spots. Thereafter, the first cluster generation unit 2032 generates first clusters using items of information on the users who have visited the spots. To each of the first clusters, types of the spots that have been visited by the users in common belong.

In step S2033, the second cluster generation unit 2033 performs the clustering on the first clusters generated by the first cluster generation unit 2032, based further on commonalities of spots visited by users, thus generating second clusters.

### (Advantageous Effects)

According to the present modification, it is possible to determine a companion of a user, change a target for the clustering of users based on the number of companion, and perform, for example, an analysis of actions of a couple, actions of a group of three or more, or the like.

### <Modification 2>

In Modification 2, the clustering is performed with temporal elements that provide a sensitivity to fashion of users, such as an opening date and a date of introduction or registration on a social networking service (SNS), a medium, or the like being given to spots. In the following description, these temporal elements are collectively denoted as an opening date.

A process in Modification 2 is performed by the same configuration as in Embodiment 1. In Embodiment 1, items of information concerning types of spots are stored in the spot information DB 1022, and the first cluster generation unit 1032 performs the clustering based on commonalities of the types of the spots. In contrast, in Modification 2, item of information concerning opening dates of spots are stored in the spot information DB 1022.

For example, the first cluster generation unit 1032 gives items of information such as visits within N days from an opening date and visits from top x% to y% of beginning days from an opening date and performs the clustering based on days since opening dates of spots.

Generating the first clusters in the above-described manner enables generation and analysis of a cluster of early adapters and the like who visit spots within short time periods from their openings.

In an embodiment of Modification 2, when the generated first clusters and second clusters are analyzed, an analysis of users using periods since opening dates may be performed, and for example, an analysis about time points of visits from the opening dates such as to what cluster users who visits spots from top x% to y% of beginning days belong may be performed. Alternatively, for example, an analysis such as users in a cluster visits some spot or some type of spot from top x% to y% of beginning days since its opening date may be performed.

### <Embodiment 2>

In Embodiment 2, after a clustering is performed, a schedule about how each cluster acts is generated and displayed. In addition, a recommendation concerning marketing is performed.

### <Configuration of Server>

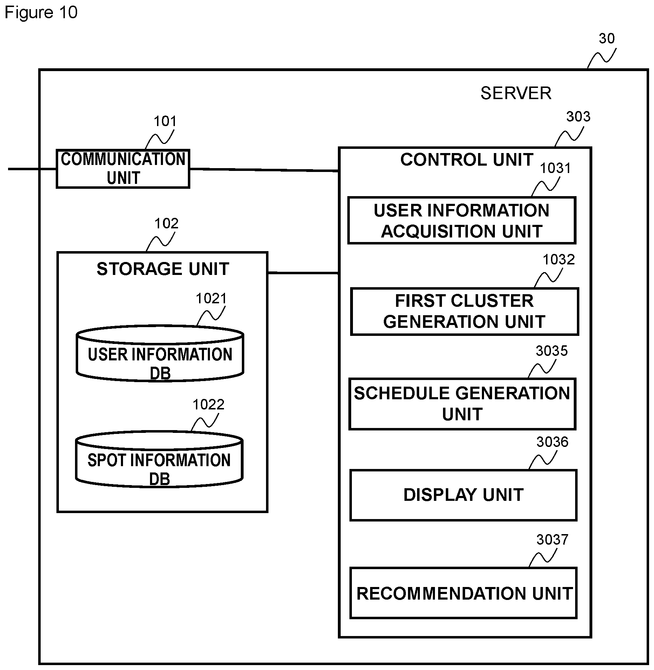

A configuration of a server 30 will be described below in detail. As illustrated in Figure 10, the server 30 according to the present embodiment includes a communication unit 101, a storage unit 102, and a control unit 303. The communication unit 101 performs a process for enabling the server 30 to communicate with another apparatus. The communication unit 101 subjects a signal generated by the control unit 303 to a transmitting process and transmits the signal subjected to the transmitting process to the outside. The communication unit 101 subjects a signal received from the outside to a receiving process and outputs the signal subjected to the receiving process to the control unit 303.

The storage unit 202 is configured with, for example, a flash memory and the like and stores data and programs to be used by the server 30.

The control unit 303 is implemented by a processor 11 reading a program stored in the storage unit 102 and executing instructions included in the program. The control unit 303 controls operation of the server 30. Specifically, for example, the control unit 303 exercises functions as a user information acquisition unit 1031, a first cluster generation unit 1032, a schedule generation unit 3035, a display unit 3036, and a recommendation unit 3037. Note that the user information acquisition unit 1031 and the first cluster generation unit 1032 performs the same processes as in the server 10.

A functional configuration of the control unit 303 of the server 30 will be described below.

The schedule generation unit 3035 generates a use schedule about how a use of a spot belonging to a cluster or a type of the spot changes for each user, for each of first clusters generated by the first cluster generation unit 1032 or for each of second clusters generated by the second cluster generation unit 1033. That is, the schedule is generated for each of the first clusters classified by the first cluster generation unit 1032 or generated for each of the second clusters classified by the second cluster generation unit 1033.

At this time, the schedule generation unit 3035 may generate the schedule after the first cluster generation unit 1032 determines a user's working, staying at home, moving, or the like from items of position information on the user, items of position information on spots, and items of time information.

When generating the schedule, for example, based on histories of changes in type of spot visited by users belonging to a first cluster or histories of changes in spot visited by users belonging to a second cluster, the schedule generation unit 3035 plots relations of changes in type of spot for each of the users, thus generating the schedule. That is, assume that there are five types of spot A to E in a first cluster. The schedule generation unit 3035 generates a pattern of changes such as A to A (continued), A to B, A to C, ..., B to A, B to B (continued), B to C, ..., E to D, and E to E (continued) for each action of a user in the form of a matrix. Thereafter, for example, the schedule generation unit 3035 generates a change pattern having the most changes as a schedule of a user who belongs to a first cluster.

The schedule generation unit 3035 is not limited to the above-described method for generating the schedule. For example, the schedule generation unit 3035 may combine types of spots that are visited by the most users, for each hour. Alternatively, for example, the schedule generation unit 3035 may generate a history of changes in type of spot for each user and generate the commonest schedule as a schedule of the cluster.

Generating the schedule in this manner enables a schedule to be generated with a context of changes in type of spot or changes in spot being grasped.

Generating the schedule using relations of changes in type of spot or changes in spot enables reduction in amount of calculation compared with creating the schedule from items of position information on users. In addition, using relations of changes in type of spot enables a common schedule about types of spots to be generated and analyzed.

For example, the schedule generation unit 3035 may determine a type of spots constituting a majority by a majority determination in a cluster at certain time intervals (every 10 minutes, 30 minutes, 1 hour, etc.) and may plot the types on a time axis, thus generating the schedule.

In addition, for example, after generating the schedule using relations of changes in type of spot or changes in spot, the schedule generation unit 3035 may determine time points by performing a majority determination on users in a cluster in question and may provide a time axis. The schedule generation unit 3035 may generate the schedule, for example, in such a manner as to select start time points constituting a majority and end time points constituting a majority for each of types of spots visited by users, assuming that the spots of the type are visited during a time period from the start time point and the end time point.

For example, in the case where changes of A to B to C are generated as the schedule, the schedule generation unit 3035 may provide the time axis in such a manner that, for example, in the case where start time points of A that constitute a majority are 9:00, a time point of 9:00 is set on the time axis for A, in the case where start time points of B that constitute a majority are 12:00, a time point of 12:00 is set on the time axis for B, and in the case where start time points of C that constitute a majority are 18:00, a time point of 18:00 is set on the time axis for C.

When generating the schedule, the schedule generation unit 3035 may generate the schedule by dividing the schedule into a main schedule and a subordinate schedule rather than generate a single route. For example, in relations of changes in type of spot or changes in spot, an event that involves the greatest change may be linked to the main schedule, and with a threshold value T being set, a schedule that involves a change of not less than T, except the main schedule, may be generated as the subordinate schedule. Further, the subordinate schedule need not be one, and a plurality of subordinate schedules may be generated.

When generating the schedule, the schedule generation unit 3035 may limit a temporal range to generate schedules such as schedules for weekdays and holydays, a schedule for each month, and a schedule for each day.

When generating the schedule, the schedule generation unit 3035 may take into account the number of companions of a user. For example, a schedule in the case of two companions, a schedule in the case of three or more companions, or the like may be generated. Further, the generated schedule may be displayed together with the number and a proportion of the companions.

Generating the schedule is not limited to that using relations of changes in type of spot or changes in spot as described above. A schedule of visiting spots of types belonging to a first cluster may be generated with a known schedule generation algorithm.

From the schedule generated by the schedule generation unit 3035, the display unit 3036 creates and displays a schedule about spots belonging to the cluster or types of the spots. At this time, the display unit 3036 may display only the main schedule or may display the main schedule and the subordinate schedule together.

When displaying the main schedule and the subordinate schedule together, the display unit 3036 may display the main schedule and the subordinate schedule with different line styles and/or colors so that the main schedule and the subordinate schedule can be distinguished from each other and/or may display the main schedule on a line while displaying the subordinate schedule in such a manner that the subordinate schedule is shifted from the line of the main schedule. Further, the main schedule and the subordinate schedule may be expressed in the form of a graph such as a pie chart and a bar chart. This allows the main schedule and the subordinate schedule in the first cluster to be visually grasped at a glance.

When displaying the schedule, the display unit 3036 may display the schedule by a plurality of display methods in a switchable manner. For example, possible methods for generating the schedule include, as described above, a method of combining types of spots that are visited by the most users for each hour, a method of combining greatest changes in type of spot, and the like, and these methods may be displayed in a switchable manner.

After creating schedules within a limited temporal range, the display unit 3036 may display the schedules in parallel. For example, the display unit 3036 may display a schedule for weekdays and a schedule for holydays in parallel and/or may display a schedule for each of days of the week in parallel.

The recommendation unit 3037 makes a recommendation after the cluster analysis of the first clusters and/or the second clusters. For example, assuming that an owner of a spot accept a recommendation, when analyzing a cluster having a strong association with a certain spot, the recommendation unit 3037 analyzes what other spots users of the certain spot visit, what types of goods and services shops where the users visit deal in, what types of goods and services the users purchase, and the like. From this, the recommendation unit 3037 may recommend, to the certain spot, goods/services, and the like to be dealt in and a shop to go into a partnership with.

For example, assuming that a person in charge in a regional development association accept a recommendation, when analyzing a cluster having a strong association with a certain region, the recommendation unit 3037 analyzes what spots users of the certain spot visit in the region, what types of goods and services shops where the users visit deal in, what spots the users visit in another region, and the like. From this, the recommendation unit 3037 may recommend, to the spot, spots that are not present in the region but have high possibilities of visits by users, goods and services that have high possibilities of purchases by users, and the like.

For example, assuming that a user accept a recommendation, the recommendation unit 3037 analyzes, from a cluster to which the user belongs, what spots other users belonging to the cluster visit, what types of goods and services shops where the users visit deal in, and the like. From this, the recommendation unit 3037 may recommend, to the user, other spots that the user has not visited, and goods and services.

With the cluster analysis as described above, the recommendation unit 3037 may recommend spots, shops, types of facilities, types of goods/services, and the like.

### (Specific Example of Generating Schedule)

The schedule generation unit 3035 generates a schedule of changes in type of spot belonging to a cluster for first clusters generated by a first cluster generation unit 3032 or the second clusters generated by the second cluster generation unit 1033. For example, the schedule generation unit 3035 generates the schedule using relations of changes in type of spot.

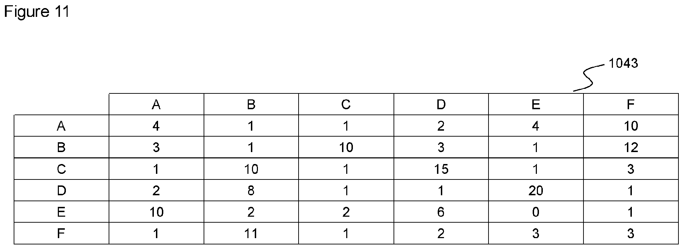

Figure 11 illustrates a specific example of relations of changes in type of spot. For example, assume that there are six types A to F of spots belonging to a first cluster. At this time, the schedule generation unit 3035 inputs changes among A to F by each user to the relations of changes in type of spot. For example, in the case where a user who stays at a spot of the type A moves to a spot of the type E, 1 is added to a cell in row A and column E. In the case where a user who stays at a spot of the type A remains in the spot of the type, 1 is added to a cell in row A and column A.

When generating the relations of changes in type of spot, the schedule generation unit 3035 may generate the relations within a time period arbitrarily divided into (a certain time period from one date and time to another date and time).

Figure 11 illustrates relations 1043 of changes in type of spot. In this matrix, assuming that A is a start point, a continuation of remaining in A is 4, a change to B is 1, a change to C is 1, a change to D is 2, a change to E is 4, and a change to F is 10. Therefore, a change from A to F is a majority and is thus grasped as the main schedule.

In the above described manner, grasping changes of majorities gives A → F, B → F, C → D, D → E, E → A, and F → B. Connecting the changes gives C → D → E → A → F → B. The schedule generation unit 3035 grasps the changes as the main schedule.

Next, in the relations 1043 of changes in type of spot in Figure 11, changes that are not grasped as the main schedule but are made by many users may be grasped as the subordinate schedule. For example, with a threshold value being set to 10, a schedule that are not grasped as the main schedule but includes changes that are made by 10 or more is grasped. Then, B → C and C → B can be grasped. Therefore, the schedule generation unit 3035 grasps B → C and C → B as subordinate schedules in addition to the main schedule.

### (Specific Example of Displaying Schedule)

From the schedule generated by the schedule generation unit 3035, the display unit 3036 displays a schedule between spots belonging to the cluster or types of the spots.

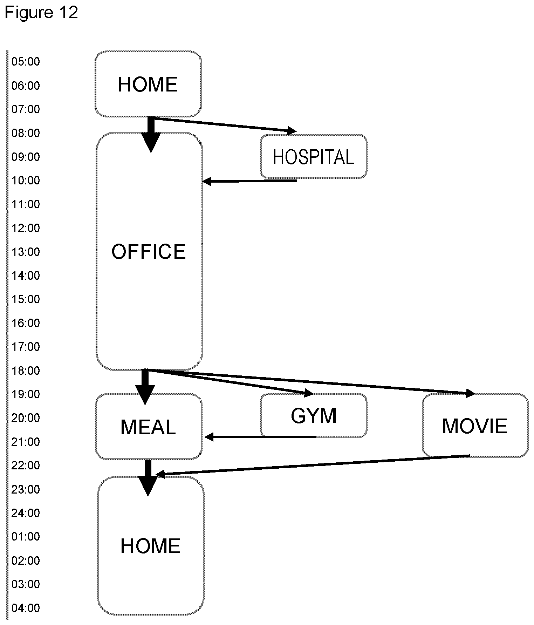

Figure 12 illustrates a specific example of the schedule displayed by the display unit 3036. In Figure 12, the main schedule "home → office → meal → home" is displayed in line, and subordinate schedules "hospital," "gym," "movie," and the like are displayed.

The display unit 3036 may display the schedules generated by the schedule generation unit 3035 and a time axis given by the schedule generation unit 3035.

For example, in Figure 12, in the case where a majority stays at "home" until 7:00, a time point of 7:00 is set on the time axis for "home." In addition, in the case where start time points of "office" and "hospital" of majorities are 8:00, a majority stays at "office" until 18:00, and a majority stays at "hospital" until 10:00, the time points are set on the time axis for them.

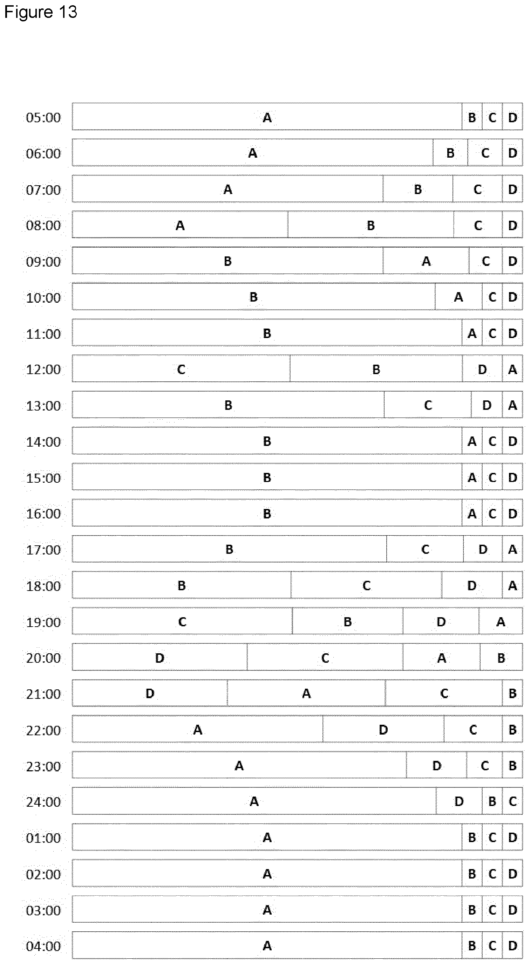

Figure 13 illustrates a specific example of the schedules displayed by the display unit 3036 using bar charts. By displaying the schedules in proportions with bar charts, the display unit 3036 may display the main schedule and the subordinate schedules in a distinguishing manner.

### (Flow of Process)

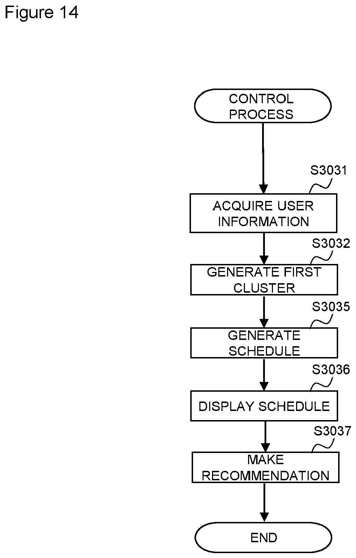

Figure 14 illustrates a flow of a process of a cluster generation program in a modification of the present disclosure.

In step S3031, the user information acquisition unit 1031 acquires items of position information on users and time points. The user information acquisition unit 1031 then stores the acquired information in the user information DB 1021.

In step S3032, the first cluster generation unit 1032 grasps what spots the users have visited using the items of position information on the users, items of time information, and items of information on spots. Thereafter, the first cluster generation unit 1032 generates first clusters using items of information on the users who have visited the spots. To each of the first clusters, types of common spots that have been visited by the users in common belong.

In step S3035, the schedule generation unit 3035 generates, in the first clusters generated by the first cluster generation unit 1032 or the second clusters generated by the second cluster generation unit 1033, a schedule from histories of users belonging to a cluster about changes in spot or changes in type of spot.

In step S3036, the display unit 3036 displays the schedule generated by the schedule generation unit 3035.

In step S3037, the recommendation unit 3037 recommends a type of a good/service to be dealt in, another spot to visit, a good or a service to purchase, or the like to a shop that or a user who belongs to a spot, an area, or a cluster.

### (Advantageous Effects)

By creating and displaying a schedule of a cluster with the schedule generation unit 3035 and the display unit 3036, it is possible to visually grasp what cluster exhibits what behavioral pattern. This enables an analysis of a behavioral pattern of a user.

In addition, performing a seasonal analysis, an analysis for weekdays and holydays, an analysis for days of the week, or the like provides changes in actions during a specific time period based on features of a user, which can be utilized for marketing.

In addition, a recommendation of a recommended spot, a recommended good/service, or the like based on the cluster analysis can be useful for regional development and stimulating consumption.

The descriptions of the embodiments will be finished here. However, the above embodiments are merely examples. Accordingly, specific configurations, details of the processes, and the like of the servers 10, 20, and 30 are not limited to those described in the above embodiments.

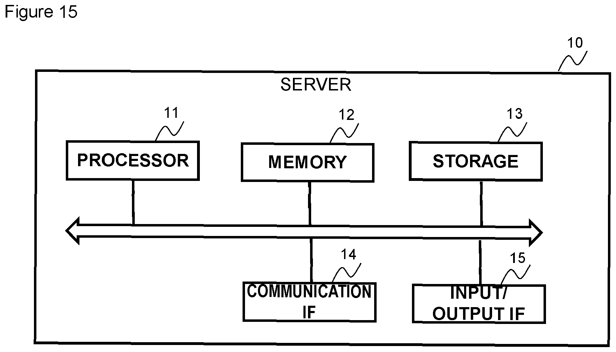

Figure 15 is a diagram illustrating a general configuration of the server 10. The server 10 is a general-purpose computer. The server 10 is provided as a desktop personal computers (PCs), laptop PCs, and the like. Alternatively, the server 10 may be a portable computer such as a smartphone or a tablet computer. Note that general configurations of the servers 20 and 30 are the same as the general configuration of the server 10.

As illustrated in Figure 15, the server 10 includes the processor 11, a memory 12, a storage 13, a communication IF 14, and an input/output IF 15.

The processor 11 is a piece of hardware for executing a set of instructions written in a program and is constituted by an arithmetic unit, registers, peripheral circuits, and the like. The memory 12 is for temporarily storing, for example, a program and data to be processed by the program or the like. For example, the memory 12 is provided in the form of a volatile memory such as a dynamic random access memory (DRAM). The storage 13 is a storage device for saving data. For example, the storage 13 is provided in the form of a flash memory or a hard disc drive (HDD). The communication IF 14 is an interface through which the server 10 transmits and receives signals to communicate with external equipment. The input/output IF 15 functions as an interface with an input device for receiving inputs from users and with an output device for presenting information to the users.

The clustering apparatus according to the present disclosure need not necessarily be implemented in, for example, a stand-alone computer. The clustering apparatus may be made to operate on a server-type computer.

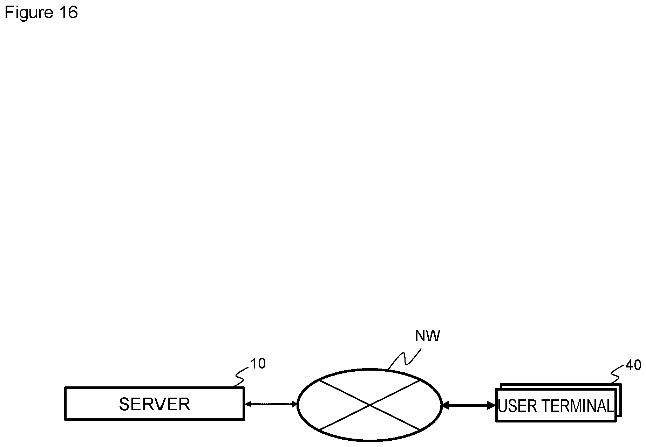

Figure 16 illustrates an example in which the server 10 for the clustering apparatus is connected to a user terminal 40. The clustering apparatus according to the present disclosure may be made to operate in such a manner that, for example, as illustrated in Figure 16, the server 10 and the user terminal 40 are connected together via a network. At this time, functions may be dispersed between the server 10 and the user terminal 40. Alternatively, the functions may be dispersed among a plurality of servers.

The information analysis apparatus according to the present disclosure need not be implemented with the apparatuses and devices. Functions of the information analysis apparatus may be implement by, for example, a computer executing a program. The program for implementing the functions of the information analysis apparatus may be stored in a computer readable recording medium such as a universal serial bus (USB) memory, a compact disc-read only memory (CD-ROM), a digital versatile disc (DVD), and a hard disc drive (HDD) or may be downloaded to a computer via a network.

Preferred embodiments of the present disclosure are described above. The present disclosure is however not limited to such specific embodiments. The present disclosure includes inventions described in claims and a scope of equivalents of the inventions. In addition, configurations of the apparatuses and devices described in the embodiments and modifications can be combined as appropriate unless no technical inconsistences arise.

### [REFERENCE SIGNS LIST]

10, 20, 30...server, 11... processor, 12...memory, 13...storage, 14...communication IF, 15...input/output IF, 40...user terminal, 101... communication unit, 102, 202...storage unit, 103, 203, 303...control unit, 1031...user information acquisition unit, 1032, 2032, 3032...first cluster generation unit, 1033, 2033, 3033...second cluster generation unit, 2034...companion determination unit, 3035...schedule generation unit, 3036...display unit, 3037...recommendation unit, 1041, 1042...specific example of cluster, 1043...specific example of relations of changes in type of spot

## Claims

1. A program for causing a computer including a processor to perform a process, the program causing the processor to execute:
a user information acquisition step of acquiring items of position information on a plurality of users and items of time information; and
a first cluster generation step of detecting, using the items of position information on the users, types of spots visited by the users and generating first clusters based on a commonality of the types of the spots visited, the first clusters being classifications of the users.

2. The program according to claim 1, wherein in the first cluster generation step, the clusters are generated based on, in addition to the commonality of the types of the spots visited, any one or more of a total duration of stay, a number of visits, an average duration of stay, time points of visit, dates and times of visit, a number of spots visited of the types of the spots visited.

3. The program according to claim 1 or claim 2, wherein in the first cluster generation step, a rarity is given based on any one or more of a proportion of a type of spot, how long a duration of stay is, how many visits are and/or a deviation in time points of visit, and when the clusters are generated based on a commonality of the types of the spots visited, the clusters are generated with the rarity taken into account.

4. The program according to any one of claims 1 to 3, further comprising a second cluster generation step of generating second clusters based on a commonality of spots visited for each of the first clusters, the second clusters being classifications of the users.

5. The program according to claim 4, wherein in the second cluster generation step, the second clusters are generated based on a commonality of spots belonging to a specified region, out of the spot visited.

6. The program according to claim 4 or claim 5, wherein in the second cluster generation step, the clusters are generated based on, in addition to the commonality of the spots visited, any one or more of a total duration of stay, a number of visits, an average duration of stay, time points of visit, and dates and times of visit, of the spots visited.

7. The program according to any one of claims 4 to 6, wherein in the second cluster generation step, a rarity is given based on any one or more of a proportion of a type of spot, how long a duration of stay is, how many visits are and/or a deviation in time points of visit, and when the clusters are generated based on the commonality of the spots visited, the clusters are generated with the rarity taken into account.

8. The program according to any one of claims 4 to 7, further comprising
a companion determination step of determining a number of companions of a user, wherein
in the first cluster generation step and the second cluster generation step, the clusters are generated using the number of companions as an element for generating the clusters.

9. The program according to any one of claims 4 to 8, further comprising a schedule step of generating, for each of the clusters classified in the first cluster generation step or the second cluster generation step, a visit schedule for each first cluster or second cluster based on changes in types of spots visited by users belonging to the cluster or changes in the spots.

10. The program according to claim 9, wherein in the schedule step, for each of the clusters classified in the first cluster generation step or the second cluster generation step, types of common spots between which many users belonging to the cluster change are linked together as a main schedule to generate the schedule for each first cluster or second cluster based on changes in types of spots visited by users belonging to the cluster or changes in the spots.

11. The program according to claim 9, wherein in the schedule step, for each of the clusters classified in the first cluster generation step or the second cluster generation step, a threshold value is set based on changes in types of spots visited by users belonging to the cluster or changes in the spots, and a change that exceeds the threshold value and is not included in the main schedule is included as a subordinate schedule to generate the schedule.

12. The program according to claim 11, further comprising a display step of displaying the schedule in such a manner as to enable the main schedule and/or the subordinate schedule generated in the schedule step to be distinguished from each other.

13. A method for causing a computer including a processor to perform a process, wherein the processor executes:
a user information acquisition step of acquiring items of position information on a plurality of users and items of time information; and
a first cluster generation step of detecting, using the items of position information on the users, types of spots visited by the users and generating first clusters based on a commonality of the types of the spots visited, the first clusters being classifications of the users.

14. An apparatus including a control unit, wherein the control unit executes:
a user information acquisition step of acquiring items of position information on a plurality of users and items of time information; and
a first cluster generation step of detecting, using the items of position information on the users, types of spots visited by the users and generating first clusters based on a commonality of the types of the spots visited, the first clusters being classifications of the users.
